# EUROPÄISCHE PATENTANMELDUNG

(11) **EP 1 326 395 A1**
(43) Veröffentlichungstag der Anmeldung: **09.07.2003**
(21) Anmeldenummer: 02011119.1
(22) Anmeldetag: 18.05.2002
(51) Int. Cl.: H04L 29/06, H04M 1/57

(54) **Verfahren zum Informationsaustausch zwischen einem ersten und einem zweiten Teilnehmer in einem Telekommunikationsnetz**

(30) Priorität: 07.01.2002 DE 10200295
(71) Anmelder: SIEMENS AKTIENGESELLSCHAFT, 80333 München (DE)
(72) Erfinder: Hoffmann, Johannes, 1220 Wien (AT); Stehlik, Günther, A-1100 Wien (AT)
(74) Vertreter: Berg, Peter, Dipl.-Ing.

(57) **Zusammenfassung**

Es wird ein Verfahren zum Informationsaustausch zwischen einem ersten und einem zweiten Teilnehmer T1 und T2 in einem Telekommunikationsnetz TNET, sowie ein Telekommunikationsnetz TNET und eine Teilnehmerendeinrichtung angegeben, wobei dem ersten Teilnehmer T1 zumindest eine Adresse ADDR einer in einem Datennetz DNET gespeicherten Information zugeordnet und gespeichert wird. Bei einem Aufbau einer Gesprächsverbindung zwischen erstem und zweiten Teilnehmer T1 und T2 wird diese Adresse ADDR ausgelesen und zum zweiten Teilnehmer T2 übertragen. In Folge wird von einem Endgerät des zweiten Teilnehmers T2 eine Anforderung an das Datennetz DNET gestellt, die der übertragenen Adresse ADDR zugeordnete Information zu übermitteln. Diese wird darauf hin vom Datennetz DNET an das Endgerät übertragen und dort angezeigt.

## Beschreibung

Es wird ein Verfahren zum Informationsaustausch zwischen einem ersten und einem zweiten Teilnehmer in einem Telekommunikationsnetz sowie ein Telekommunikationsnetz und eine Teilnehmerendeinrichtung zur Durchführung des erfindungsgemäßen Verfahrens angegeben.

Die moderne Telekommunikation fußt - nicht zuletzt aus historischen Gründen - auf unterschiedlichen Technologien. Beispielsweise ermöglichen klassische Telekommunikationsnetze, also verbindungsorientierte Netze, Gespräche, also die synchrone Kommunikation, zwischen Teilnehmern, die sich an verschiedenen Orten aufhalten. Neben diesen Telekommunikationsnetzen existieren aber auch Datennetze, also paketvermittelnde Netze, über die in der Regel Textinformation übertragen wird, zunehmend aber auch Daten anderer Art, wie etwa Bilder, Videos, Musik und so weiter. Eine Eigenschaft dieser Netze ist, dass Information im wesentlichen asynchron übertragen wird. Da es in der jüngeren Vergangenheit jedoch Bestrebungen gab, synchrone Sprachkommunikation auch auf paketvermittelnden Netzen beziehungsweise den allgemeinen Datenverkehr auf verbindungsorientierten Netzen zu ermöglichen, kann keine scharfe Grenze zwischen diesen beiden unterschiedlichen Netzen gezogen werden. Zur besseren Verständlichkeit wird diese Unterscheidung im folgenden jedoch beibehalten.

Trotz verschiedenster Bemühungen die beiden unterschiedlichen Technologien zu verschmelzen, was auch unter dem Begriff "Konvergenz" bekannt ist, erfolgt die Kommunikation zwischen den Teilnehmern nach dem Stand der Technik je nach Bedarf entweder über ein Gespräch oder über den elektronischen Transfer von Texten, Bildern und dergleichen. Unter "Kommunikation" ist in diesem Zusammenhang auch das einfache Versenden oder Abrufen von Information zu verstehen. Verfügen die Teilnehmer über beide Möglichkeiten, kann die Kommunikation auch parallel, also mittels Gespräch und mittels elektronischem Transfer von Informationen, erfolgen. Der Aufbau der beiden Kommunikationswege muss dabei in der Regel für jeden Weg manuell erfolgen. Da ein und derselbe Teilnehmer in verschiedenen Netzen üblicherweise auch unter unterschiedlichen Adressen erreichbar ist, erfordert dies bei einem Teilnehmer, der mit einem anderen in Kontakt treten möchte, noch dazu die Kenntnis mehrerer Adressen. Eine Möglichkeit, mehrere Kommunikationswege automatisch parallel aufzubauen, existiert nach dem Stand der Technik nicht.

Aufgabe der Erfindung ist es daher, ein Verfahren und eine Vorrichtung anzugeben, welche die Kommunikation zwischen den Teilnehmern eines Telekommunikationsnetzes verbessert.

Die Aufgabe der Erfindung wird mit einem Verfahren gelöst,
- bei welchem dem ersten Teilnehmer zumindest eine Adresse einer in einem Datennetz gespeicherten Information zugeordnet wird und diese Adresse im Telekommunikationsendgerät des ersten Teilnehmers oder diese Zuordnung im Telekommunikationsnetz gespeichert wird, insbesondere durch Speicherung der Adresse in einem dem ersten Teilnehmer zugeordneten Speicherbereich,
- bei welchem diese Adresse bei einem Aufbau einer Gesprächsverbindung zwischen erstem und zweiten Teilnehmer ausgelesen und zum zweiten Teilnehmer übertragen wird,
- bei welchem diese Adresse von einem Endgerät des zweiten Teilnehmers empfangen wird und in Folge eine Anforderung an das Datennetz gestellt wird, die der übertragenen Adresse zugeordnete Information zu übermitteln und
- bei welchem darauf hin die Information vom Datennetz an das Endgerät übermittelt und dort angezeigt wird.

Im Zuge eines Initialisierungsvorganges beispielsweise wird einem ersten Teilnehmer eine Adresse einer in einem Datennetz gespeicherten Information zugeordnet. Dazu existieren zwei Möglichkeiten. Einerseits kann diese Adresse direkt im Telekommunikationsendgerät des ersten Teilnehmers gespeichert werden und bei einem Aufbau einer Gesprächsverbindung von dort an das Endgerät des zweiten Teilnehmers übertragen werden, oder es erfolgt die Speicherung der Zuordnung im Telekommunikationsnetz, wobei dieses zum Beispiel einen dem ersten Teilnehmer zugeordneten Speicherbereich umfasst, in welchen die Adresse eingetragen werden kann. In diesem Fall wird die Adresse vom Telekommunikationsnetz an den zweiten Teilnehmer übertragen. Wird diese Adresse nun vom Endgerät des zweiten Teilnehmers empfangen, wird von diesem eine Anforderung an das Datennetz gestellt, die der Adresse zugeordnete Information zu übermitteln. Kann Adresse im Datennetz entsprechend ausgewertet und die Information aufgefunden werden, so wird diese an das Endgerät übermittelt und dort angezeigt.

Vorteilhaft ist dabei, dass dem zweiten Teilnehmer auf einfache Weise Information zugänglich gemacht werden kann, welche dem ersten Teilnehmer zugeordnet ist. Handelt es sich beim ersten Teilnehmer um einen Dienstleister, so kann diese Information eine Übersicht über das Dienstleistungsangebot beispielsweise inklusive einer Bestellmöglichkeit enthalten.

Ruft der zweite Teilnehmer nun den ersten, etwa um Auskunft über dieses Angebot zu erhalten, ist es möglich, diese Information als Stütze für eine allfälliges Gespräch zu nutzen. Denkbar ist aber auch, dass es sich beim ersten Teilnehmer etwa um ein Versicherungsunternehmen, beim zweiten Teilnehmer um einen Klienten handelt. Ruft nun der erste den zweiten Teilnehmer, beispielsweise wegen eines Schadensfalles, kann sich die an den zweiten Teilnehmer übermittelte Information auch konkret auf diesen Schadensfall beziehen, um den Ablauf des Gesprächs zu vereinfachen. Wurde vom Klienten beispielsweise ein Formular unzureichend ausgefüllt, so kann die Information direkt das digitalisierte Formular umfassen. Eine Rückfrage gestaltet sich somit also wesentlich einfacher.

Es wird darauf hingewiesen, dass die Trennung in Datennetz und Telekommunikationsnetz in diesem Zusammenhang nicht zwingend erforderlich ist. Vielmehr kann eine genaue Grenze zwischen klassischen Telekommunikationsnetzen, also verbindungsorientierten Netzen, und klassischen Datennetzen, also paketvermittelnden Netzen, aufgrund der in letzter Zeit stattfindenden Konvergenz zwischen diesen ohnehin nicht angegeben werden.

Die Aufgabe der Erfindung wird auch mit einem Verfahren gelöst,
- bei welchem dem ersten Teilnehmer zumindest eine Adresse einer in einem Datennetz gespeicherten Information zugeordnet wird und diese Adresse im Telekommunikationsendgerät des ersten Teilnehmers oder diese Zuordnung im Telekommunikationsnetz gespeichert wird, insbesondere durch Speicherung der Adresse in einem dem ersten Teilnehmer zugeordneten Speicherbereich,
- bei welchem diese Adresse bei einem Aufbau einer Gesprächsverbindung zwischen erstem und zweiten Teilnehmer vom Telekommunikationsnetz empfangen oder ausgelesen wird und in Folge vom Telekommunikationsnetz eine Anforderung an das Datennetz gestellt wird, die der übertragenen Adresse zugeordnete Information zu übermitteln und
- bei welchem darauf hin die der Adresse zugeordnete Information vom Datennetz an das Endgerät des zweiten Teilnehmers übermittelt und dort angezeigt wird.

Auch für diese Ausgestaltung des erfindungsgemäßen Verfahrens gilt das bereits Gesagte. Im Gegensatz zum Verfahren gemäß Anspruch 1 wird hier jedoch nicht Adresse an das Endgerät des zweiten Teilnehmers übermittelt, sondern direkt vom Telekommunikationsnetz eine entsprechende Anforderung an das Datennetz gestellt, sodass in Folge die der Adresse zugeordnete Information an das Endgerät des zweiten Teilnehmers übermittelt werden kann. Dieses Verfahren zeichnet sich insbesondere durch einen geringeren Signalisierungsaufwand aus.

Schließlich wird die erfindungsgemäße Aufgabe weiterhin mit einem Verfahren gelöst,
- bei welchem einer dem ersten Teilnehmer im Telekommunikationsnetz zugeordneten Identifikation zumindest eine Adresse einer in einem Datennetz gespeicherten Information zugeordnet wird und diese Zuordnung im Telekommunikationsendgerät des zweiten Teilnehmers gespeichert wird,
- bei welchem die dem ersten Teilnehmer im Telekommunikationsnetz zugeordnete Identifikation bei einem Aufbau einer Gesprächsverbindung zwischen erstem und zweiten Teilnehmer zum zweiten Teilnehmer übertragen wird,
- bei welchem dort mit Hilfe der empfangenen Identifikation und der gespeicherten Zuordnung die Adresse der in dem Datennetz gespeicherten Information ausgelesen wird und in Folge eine Anforderung an das Datennetz gestellt wird, die der übertragenen Adresse zugeordnete Information zu übermitteln und
- bei welchem darauf hin die Information vom Datennetz an das Endgerät übermittelt und dort angezeigt wird.

Bei dieser Variante der Erfindung erfolgt die Zuordnung einer dem ersten Teilnehmer zugeordneten Identifikation zu einer Adresse einer in einem Datennetz gespeicherten Information im Telekommunikationsendgerät des zweiten Teilnehmers. Dadurch wird eine große Flexibilität für den zweiten Teilnehmer erreicht, beliebige Zuordnungen vergleichsweise einfach vorzunehmen.

Dabei kann etwa der Dienst "Calling Line Identification Presentation", kurz CLIP, oder der Dienst "Connected Line Presentation", kurz COLP, bei dem die Rufnummer des rufenden Teilnehmers beim gerufenen Teilnehmer beziehungsweise umgekehrt angezeigt wird, vorteilhaft angewandt werden, wenn einer Rufnummer eines Teilnehmers eine Adresse einer Information zugeordnet wird. Bei einem Verbindungsaufbau wird so automatisch die entsprechende Information angezeigt.

Günstig ist es, wenn die Adresse mit Hilfe des Dienstes Calling Name Identification Presentation und/oder Connected Name Identification Presentation übertragen wird.

Der Dienst "Calling Name Identification Presentation", kurz CNIP, ist ein für ein öffentliches oder privates Telefonnetz spezifizierter Dienst, der bestimmten Teilnehmeranschlüssen zugeordnet werden kann. Dabei wird der Name des rufenden Teilnehmer beim gerufenen Teilnehmer angezeigt. Desgleichen existiert der Dienst "Connected Name Identification Presentation", kurz CNOP, zur Anzeige des Namens des gerufenen Teilnehmers beim rufenden Teilnehmer

Das Protokoll unterstützt derzeit die Vergabe einer bis zu 15 Zeichen umfassenden Zeichenkette. Die Funktion des erfindungsgemäßen Verfahrens hängt dabei aber nicht von der aktuellen Ausprägung dieses Dienstes ab, sondern ist selbstverständlich auch mit zukünftigen Ausführungen oder ähnlichen Diensten gegeben. In diesem Zusammenhang wird insbesondere auf Dienste verwiesen, die Zeichenketten mit mehr als 15 Zeichen unterstützen. Die Dienste CNIP und CNOP sind daher nur Beispiele, wie das erfindungsgemäße Verfahren realisiert werden kann. Die Anwendung eines verfügbaren und erprobten Standards wirkt sich jedenfalls günstig auf die praktische Umsetzung des erfindungsgemäßen Verfahrens aus.

Als Adresse kann dabei eine Internetadresse vorgesehen werden, die mit Hilfe des Dienstes CNIP oder CNOP anstelle des Namens oder zusätzlich zum Namen übertragen wird. Aufgrund der speziellen Eigenschaften einer Internetadresse, nämlich den typischen darin enthaltenen Elementen "http://" und "www." beziehungsweise auch "htm.", ".html", sowie im Falle von WAP ".wml", ist die Identifikation einer solchen sehr leicht möglich. Eine Weiterleitung an ein Endgerät, welches sich zur Darstellung einer solchen Internet- oder WAP-Seite eignet, ist daher auf einfache Weise möglich.

Eine vorteilhafte Ausgestaltung der Erfindung ist mit einem Verfahren gegeben, bei dem die Adresse mit Hilfe der User to User Signalisierung übertragen wird.

Die User to User Signalisierung ist ein Leistungsmerkmal von Euro-ISDN, das es erlaubt während des Verbindungsaufbaus, der Übertragung oder des Verbindungsabbaus Informationen oder Nachrichten zwischen Teilnehmer in einem Telekommunikationsnetz auszutauschen, wobei die Länge der Nachrichten dabei auf 32 Byte beschränkt ist. Für die Anwendung auf das erfindungsgemäße Verfahren gilt im wesentlichen das bereits für die Dienste CNIP und CNOP Gesagte.

Günstig ist es weiterhin, wenn nur ein Teil der Adresse an das Endgerät des zweiten Teilnehmers übermittelt wird und dort ergänzt wird, insbesondere weil nur ein Teil der Adresse im Telekommunikationsendgerät oder Telekommunikationsnetz gespeichert wurde.

Da die Ressourcen zur Abspeicherung von Adressen in der Regel limitiert sind, ist es denkbar, nur einen Teil der Adresse an den zweiten Teilnehmer zu übermitteln. Vorteilhaft dabei ist auch die geringere Belastung des Telekommunikationsnetzes bei der eigentlichen Übertragung.

Bei der Übertragung von Internetadressen können durch das Weglassen redundanter Information daher vorteilhaft Zeichen eingespart werden, etwa dadurch, dass der obligate Beginn einer Internetadresse "http://www." einfach weggelassen wird. Wird das Verfahren innerhalb einer Firma installiert, also in einem Intranet, so kann das erwähnte Vorgehen noch erweitert werden, wenn zum Beispiel alle Seiten, die mit Hilfe des erfindungsgemäßen Verfahrens angezeigt werden sollen, etwa mit "http://www.firmenname.land" beginnen. Insbesondere bei der Verwendung des Dienstes CNIP ergeben sich aufgrund der Beschränkung der Länge der zu übertragenden Zeichenkette auf 15 Zeichen große Vorteile.

Eine vorteilhafte Variante der Erfindung ergibt sich auch, wenn die Adresse vor der Übermittlung an das Endgerät des zweiten Teilnehmers komprimiert wird und dort wieder dekomprimiert wird, insbesondere weil die Adresse im Telekommunikationsnetz in komprimierter Form gespeichert wurde.

Dabei können alle bekannten Kompressionsverfahren zur Komprimierung von Zeichenketten angewendet werden. Günstig ist dabei die geringere Belastung des Telekommunikationsnetzes und insbesondere bei der Verwendung des Dienstes CNIP die möglichst hohe Ausnutzung der zur Verfügung stehenden Zeichen. Theoretisch können in diesem Fall nämlich 2^{(15 Zeichen *} ^{8 Bits)} = 2¹²⁰ Symbole übertragen werden.

Eine besonders vorteilhafte Ausgestaltung der Erfindung ist mit einem Verfahrens gegeben, bei welchem vor dem Übertragen der Adresse der Information oder der Information selbst geprüft wird, ob der zweite Teilnehmer über ein zur Anzeige dieser Information geeignetes und/oder betriebsbereites Endgerät verfügt.

Um die Ressourcen des Datennetzes und des Telekommunikationsnetzes nicht unnötig zu belasten kann vor dem Übertragen der Adresse oder der Information das Endgerät des zweiten Teilnehmers, etwa ein Personal Computer, dahingehend überprüft werden, ob dieser auch zum Empfang und zur Anzeige der Information geeignet ist beziehungsweise betriebsbereit ist. Bei Teilnehmern, die beispielsweise über einen POTS-Anschluss mit dem Telekommunikationsnetz verbunden sind und die sich mit ihrem Personal Computer nur über eine spezielle Einwahlnummer mit dem Internet verbinden können, ist ein stets empfangsbereites Gerät nicht gegeben. Vielmehr muss in der Regel eine eventuelle Internetverbindung für die Dauer eines Telefongesprächs unterbrochen werden. Solchen Teilnehmern kann die Information erst verspätet angezeigt werden. Daher eignet sich dafür beispielsweise auch ein Fax oder eine EMail.

Vorteilhaft ist es auch, wenn bei Vorhandensein von mehreren zugeordneten Adressen eine davon ausgewählt und nur diese an den zweiten Teilnehmer übermittelt wird, insbesondere in Abhängigkeit von einer Uhrzeit und/oder einem Zustand und/oder dem Auftreten eines Ereignisses und/oder der Adresse des zweiten Teilnehmers im Telekommunikationsnetz und/oder einer dem zweiten Teilnehmer zugeordneten Eigenschaft.

Vom ersten Teilnehmer kann vorgesehen werden, dass dem zweiten Teilnehmer je nach Erfordernis verschiedene Informationen angezeigt werden soll. Beispielsweise kann im Geschäftsbetrieb zu den Öffnungszeiten eine andere Information angezeigt werden, als zu den Ruhezeiten. Dies ist etwa auch im Zusammenhang mit ärztlicher Versorgung von Vorteil. Das Anzeigen verschiedener Informationen kann aber auch von bestimmten Zuständen abhängig gemacht werden. Ein Beispiel hierfür wäre ein vom zweiten Teilnehmer initiierter Anruf an den ersten Teilnehmer. In Abhängigkeit ob eine Rufumlenkung für den ersten Teilnehmer vorgesehen ist oder nicht, können dem zweiten Teilnehmer unterschiedliche Informationen angezeigt werden. Aber auch das Auftreten eines Ereignisses, etwa das Abheben eines anderen als des gewünschten Teilnehmers, kann als Unterscheidungskriterium verwendet werden. Schließlich kann die Anzeige von Information auch von der Adresse des zweiten Teilnehmers im Telekommunikationsnetz abhängig gemacht werden. Beispielsweise kann einem bestimmten Personenkreis auf diese Weise vertrauliche Information zugänglich gemacht werden. Aber auch eine dem zweiten Teilnehmer zugeordnete Eigenschaft kann zur Unterscheidung, welche Information angezeigt werden soll, dienen. Ist der erste Teilnehmer etwa ein Bankunternehmen und der zweite Teilnehmer dessen Kunde, so kann beispielsweise ein bestimmter Kontostand des zweiten Teilnehmers zur Anzeige unterschiedlicher Information herangezogen werden.

Eine besonders vorteilhafte Variante ergibt sich mit einem Verfahren, bei dem als Information Daten in einem nach einem xML-Standard spezifizierten Format übertragen werden, insbesondere im HTML-Format und/oder im WML-Format.

Da Informationen häufig in einem solchen Format vorliegen, beziehungsweise auch Geräte zur Anzeige dieser Information weit verbreitet sind, tritt der Vorteil der Erfindung an dieser Stelle besonders hervor.

HTML hat die Aufgabe, die logischen Bestandteile eines Dokuments zu beschreiben und enthält daher Befehle zum Markieren typischer Elemente eines Dokuments, wie Überschriften, Textabsätze, Listen, Tabellen oder Grafikreferenzen. Ein weiterer Hauptbestandteil von HTML sind Verweise auf weitere Dokumente oder Stellen innerhalb eines Dokuments, welche unter dem Begriff "Links" bekannt sind. HTML ist zu einem maßgebenden Standard für das Internet geworden.

Für das erfindungsgemäße Verfahren ist die Verwendung von HTML unter anderem deswegen vorteilhaft, weil so auf erprobte Standardkomponenten zurückgegriffen werden kann, wie zum Beispiel Standardanzeigesoftware für HTML-Daten, bekannt unter dem Begriff "WWW-Browser". Die angeführten Vorteile gelten dabei gleichermaßen auch für die "Wireless Markup Language", kurz WML, die für den Einsatz auf Mobiltelefonen konzipiert wurde und bei der auf die speziellen Gegebenheiten bei derartigen Geräten, insbesondere auf die vergleichsweise kleine Anzeige, Rücksicht genommen wurde. Durch die Verwendung von Links ist das Auffinden weitergehender Information für den zweiten Teilnehmer überdies besonders einfach.

Weiterhin ist es besonders vorteilhaft, wenn in der übermittelten Information auch plattformunabhängige Programmmodule enthalten sind, insbesondere Programmmodule nach dem JAVA-Standard. JAVA ist eine von Sun Microsystems entwickelte, vollkommen plattformunabhängige Programmiersprache mit spezieller Ausrichtung auf den Einsatz im Internet und lehnt sich in Aufbau und Syntax an die Programmiersprache C/C++ an. Java-Programme können in HTML-Dateien referenziert werden, wobei das Programm in den Arbeitsspeicher des aufrufenden Rechners geladen und dort vom Java-Interpreter des WWW-Browsers ausgeführt wird. JAVA ist ein maßgebender Standard für die komfortable Nutzung des Internets.

Ein wesentlicher Vorteil für das erfindungsgemäße Verfahren ist die Unabhängigkeit von bestimmten Hardwarearchitekturen und Betriebssystemen und im Falle von JAVA das Vorhandensein von erprobten Standardkomponenten.

Besonders vorteilhaft ist es auch, wenn der Informationsaustausch zwischen zwei technologisch unterschiedlichen Telekommunikationsnetzen erfolgt und wenn an der Schnittstelle dieser beiden Netze die Adresse der gespeicherten Information von einem Format auf das andere Format umgewandelt wird.

Bei der Kommunikation mittels Endgeräten, welche etwa nach dem Standard "Universal Mobile Telecommunication System", kurz UMTS, arbeiten, findet das "Session Initiation Protocol", kurz SIP, Anwendung, welches unter anderem die Übertragung eines "Universal Resource Locator", kurz URL, ermöglicht. Unter dieser URL, die zum Beispiel die Rufnummer und die IP-Adresse eines UMTS-Endgeräts beinhaltet, ist ein Teilnehmer in einem Telekommunikationsnetz erreichbar. Die URL wird dabei mit Hilfe einer "Invite-Funktion" im "contact general-header field" übertragen. Informationen zu SIP können beispielsweise aus dem Dokument RFC2543 vom März 1999 erhalten werden, welches unter der Internetadresse "www.ietf.org" verfügbar ist.

Durch eine geeignete Gateway-Funktion an der Schnittstelle zwischen einem UMTS-Netz und einem Telekommunikationsnetz, welches diese Funktionalität nicht unterstützt, kann das Zusammenwirken dieser beiden Netze, das auch unter dem Begriff "Interworking" bekannt ist, verbessert werden. So kann etwa eine URL, welche mit Hilfe der User-to-User-Signalisierung oder mit Hilfe des Dienstes "Calling Name Identification Presentation" übermittelt wird, an der Schnittstelle in das für SIP gängiges Format konvertiert werden und umgekehrt.

UMTS-ähnliche Leistungsmerkmale können dadurch für beliebige Teilnehmer in einem Telekommunikationsnetz emuliert werden. Auf diese Weise kann etwa im Zuge einer Gesprächsverbindung eine Internetverbindung von einem UMTS-Endgerät zu einer URL eines Teilnehmers, welcher über kein UMTS-Endgerät verfügt, aufgebaut werden.

Sofern ein UMTS-Endgerät die User-to-User-Signalisierung unterstützt, kann die URL selbstverständlich auch auf die bereits zuvor beschriebene Weise, also ohne Umsetzung durch eine Gateway-Funktion, übermittelt werden.

Besonders vorteilhaft ist es weiterhin, wenn als Information ein dem ersten Teilnehmer zugeordnetes Bild übermittelt wird.

Obwohl die sogenannte Video-Telefonie vom Prinzip seit langer Zeit bekannt ist, scheitert die praktische Umsetzung nach wie vor an der häufig fehlenden Übertragungsbandbreite. Eine der Aufgaben der vorliegenden Erfindung ist es daher auch, ein Verfahren für die Übermittlung einer einem Teilnehmer zugeordneten Bildinformation bereitzustellen. Vorzugsweise kommen dabei Standbilder zum Einsatz, beispielsweise Passfotos, die der Betreiber eines Telekommunikationsnetzes bei der Anmeldung neuer Teilnehmer in einer geeigneten Datenbank speichert. Auf diese Weise können die Teilnehmer eines Telekommunikationsnetzes mit vergleichsweise geringem technischen Aufwand über das Aussehen des jeweiligen Gesprächspartners informiert werden. Denkbar sind selbstverständlich auch bewegte Bilder die entweder synchron zur Gesprächsverbindung aufgenommen werden, oder aber auch Videoclips, die zu einem früheren Zeitpunkt aufgenommen wurden. Vorteilhaft können diese für Werbezwecke eingesetzt werden. Sowohl die Standbilder, als auch Videos können dabei komprimiert übertragen werden. Beispiele für Kompressionsverfahren sind das JPEG-Verfahren für Stillvideos und das MPEG-Verfahren für bewegte Videos. Denkbar ist selbstverständlich auch, dass auch Musik beziehungsweise akustische Information gemeinsam mit Bildinformation oder auch alleine übermittelt wird.

Die Aufgabe der Erfindung wird auch mit einem Telekommunikationsnetz gelöst,
- wenn darin Mittel zum Speichern und zum Auslesen einer einem ersten Teilnehmer zugeordneten Adresse, welche auf eine Information in einem Datennetz verweist, vorgesehen sind und
- wenn dieses Mittel zur Übertragung dieser Adresse an einen zweiten Teilnehmer dieses Telekommunikationsnetzes in Folge eines Verbindungswunsches zwischen dem ersten und dem zweiten Teilnehmer umfasst.

Dieses Telekommunikationsnetz bildet eine Grundlage, die Kommunikation zwischen einem ersten und einem zweiten Teilnehmer dieses Netzes dahingehend zu vereinfachen, dass in diesem Netz Mittel zum Speichern und zum Auslesen einer Adresse, welche auf eine dem ersten Teilnehmer zugeordnete Information verweist, und Mittel zum Übertragen dieser Adresse an den zweiten Teilnehmer umfasst. Diese Information kann als Stütze für ein allfälliges Gespräch dienen

Die Aufgabe der Erfindung wird weiterhin mit einem Telekommunikationsnetz gelöst,
- in welchem Mittel zum Speichern und zum Auslesen einer einem ersten Teilnehmer zugeordneten Adresse, welche auf eine Information in einem Datennetz verweist, vorgesehen sind und
- bei dem dieses Mittel zum Stellen einer Anforderung an dieses Datennetz beinhaltet, die dieser Adresse zugeordnete Information in Folge eines Verbindungswunsches zwischen dem ersten und dem zweiten Teilnehmer zu übermitteln und
- dass dieses Mittel zur Übertragung dieser Information an einen zweiten Teilnehmer dieses Telekommunikationsnetzes umfasst.

Das erfindungsgemäße Telekommunikationsnetz unterscheidet sich vom Telekommunikationsnetz nach Anspruch 8 lediglich darin, dass hiervon Mittel zum Stellen einer Anforderung an ein Datennetz umfasst sind, sodass nicht die Adresse einer Information, sondern die Information selbst an einen zweiten Teilnehmer übertragen werden kann.

Weiterhin wird die erfindungsgemäße Aufgabe mit einem Teilnehmerendgerät gelöst,
- welches Mittel zum Speichern einer Adresse, welche auf eine Information in einem Datennetz verweist, umfasst und
- welches Mittel zum Senden dieser Adresse beim Aufbau einer Gesprächsverbindung umfasst.

Mit Hilfe dieses Teilnehmerendgerätes ist es für einen Teilnehmer besonders einfach, eine Adresse einer auf ihn bezogenen Information zu speichern, welche beim Aufbau einer Gesprächsverbindung an einen anderen Teilnehmer übermittelt wird.

Die Aufgabe der Erfindung wird auch mit einem Teilnehmerendgerät gelöst,
- welches Mittel zum Empfang einer Adresse, welche auf eine Information in einem Datennetz verweist, beim Aufbau einer Gesprächsverbindung umfasst,
- welches Mittel zum Stellen einer Anforderung an dieses Datennetz beinhaltet, die dieser Adresse zugeordnete Information zu übermitteln und
- welches Mittel zur Darstellung dieser Information umfasst.

Mit Hilfe dieses Teilnehmerendgerätes ist es möglich, dass eine Information in einem Datennetz, auf welche eine an dieses Endgerät übermittelte Adresse verweist, angezeigt werden kann. Dieses Endgerät bietet also eine Basis, die Kommunikation zwischen zwei Teilnehmern mittels erfindungsgemäßem Verfahren zu vereinfachen.

Schließlich wird die erfindungsgemäße Aufgabe auch mit einem Datenträger gelöst, dessen Inhalt, wenn er auf ein Teilnehmerendgerät transferiert und dort in Form eines Programms gestartet wird, alle die vom Teilnehmerendgerät durchzuführenden Schritte des erfindungsgemäßen Verfahrens ausführt.

Diese Variante der Erfindung ist besonders dann vorteilhaft, wenn etwa ein bestehendes Endgerät für das erfindungsgemäße Verfahren nachgerüstet werden soll.

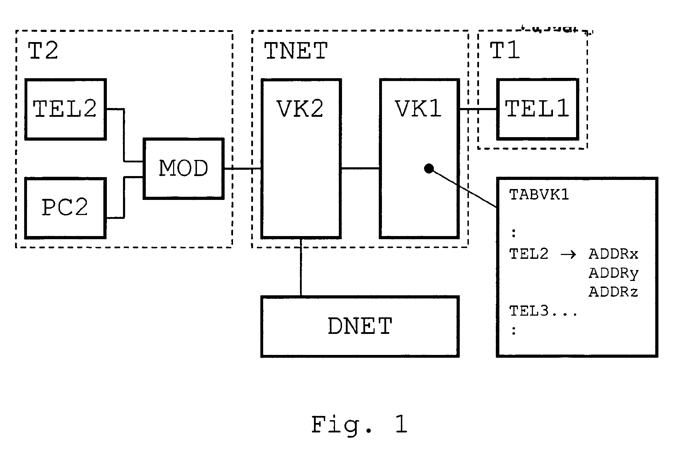

Die Erfindung wird nun anhand eines in der Figur 1 dargestellten Ausführungsbeispiels, welches eine beispielhafte Anordnung zur Durchführung des erfindungsgemäßen Verfahrens betrifft, näher erläutert.

Die Figur 1 umfasst einen ersten Vermittlungsknoten VK1 und einen mit diesem verbundenen, zweiten Vermittlungsknoten VK2, sowie ein Datennetz DNET, welches ebenfalls mit dem zweiten Vermittlungsknoten VK2 verbunden ist. An den zweiten Vermittlungsknoten VK2 ist überdies ein zweites Telefon TEL2 und ein zweiter Personal Computer PC2 angeschlossen, wobei die Anschlussleitungen der beiden Geräte an ein Modem MOD angeschlossen sind und von dort eine Anschlussleitung zum zweiten Vermittlungsknoten VK2 geführt wird. Schließlich ist ein erstes Telefon TEL1 an den ersten Vermittlungsknoten VK1 angeschlossen. Der erste Vermittlungsknoten VK1 umfasst überdies noch eine Zuordnungstabelle TABVK1, welche die Zuordnung einer oder mehrerer Adressen ADDR zu einem Telefon TEL beziehungsweise einem diesen zugeordneten Teilnehmer beinhaltet. Beispielhaft ist dort die Zuordnung einer ersten bis dritten Adresse ADDRx..ADDRz zum zweiten Telefon TEL2 dargestellt.

Schließlich werden der erste und der zweite Vermittlungsknoten VK1 und VK2 zum Telekommunikationsnetz TNET zusammengefasst, das zweite Telefon TEL2, der zweite Personal Computer PC2 sowie das Modem MOD seien Geräte beim zweiten Teilnehmer T2 und das erste Telefon TEL1 das Gerät beim ersten Teilnehmer T1.

Als Teilnehmerendgeräte eignen sich in diesem Zusammenhang insbesondere Mobiltelefone, drahtgebundene Telefone, gegebenenfalls geeignet zur Anzeige von Informationen, Personal Digital Assistants, kurz PDAs, Laptops, und Personal Computer, eventuell geeignet zur Sprachkommunikation.

Die Funktion der in der Figur 1 dargestellten Anordnung ist wie folgt:

Zur Erhöhung der Anschaulichkeit sei als erster Teilnehmer T1 ein Mitarbeiter einer Firma, als zweiter Teilnehmer T2, ein Kunde dieser Firma angenommen. Dieses Beispiel dient ausschließlich dem besseren Verständnis und ist nicht als Einschränkung des allgemeinen erfinderischen Gedankens zu verstehen.

Weiterhin wird angenommen, dass die Verbindung zwischen Modem MOD und zweitem Vermittlungsknoten VK2 zum gleichzeitigen Datenverkehr mittels zweitem Telefon TEL2 und zweitem Personal Computer PC2 geeignet ist. Ein Beispiel hierfür wäre ein xDSL-Anschluß.

Der zweite Teilnehmer T2 initiiert nun mit Hilfe des zweiten Telefons TEL2 einen Ruf zum ersten Teilnehmer T1 und wählt dazu dessen Nummer. Diese Anforderung wird daraufhin vom zweiten Vermittlungsknoten VK2 vorbewertet und in Folge an den ersten Vermittlungsknoten VK1 weitergeleitet. Im ersten Vermittlungsknoten VK1 wird neben der Signalisierung des Rufwunsches an das erste Telefon TEL1 auch die Auswertung der Zuordnungstabelle TABVK1 veranlasst.

Die erste Adresse ADDRx sei dabei für Anrufe innerhalb der Öffnungszeiten, etwa zwischen 8:00 und 16:00 vorgesehen, die zweite Adresse ADDRy für Anrufe außerhalb dieser Zeiten und die dritte Adresse ADDRz für bereits registrierte Kunden. Die Zuordnungstabelle TABVK1 wurde dabei vom ersten Teilnehmer T1 zu einem früheren Zeitpunkt im Zuge eines Initialisierungsvorganges erzeugt.

Im ersten Vermittlungsknoten VK1, der auch als private Nebenstellenanlage ausgeführt sein kann, wird mit Hilfe einer nicht dargestellten Datenbank in einem ersten Schritt überprüft, ob die Rufnummer des zweiten Teilnehmers T2, welche vom zweiten Vermittlungsknoten VK2 an den ersten Vermittlungsknoten VK1 übermittelt wurde, bereits registriert ist. Da angenommen wird, dass es sich beim zweiten Teilnehmer T2 um einen Neukunden handelt, findet sich dort jedoch kein Eintrag.

Als zweiter Schritt wird die Uhrzeit zur Ermittlung der zu übersendenden Adresse herangezogen, wobei angenommen wird, dass der Ruf innerhalb der Öffnungszeiten initiiert wurde. Daher wird die erste Adresse ADDRx über den zweiten Vermittlungsknoten VK2 an den zweiten Teilnehmer T2 übertragen, beispielsweise mit Hilfe des Dienstes CNOP. Dort wird die erste Adresse ADDRx mit Hilfe des dafür vorbereiteten Modems MOD ausgekoppelt und an den zweiten Personal Computer PC2, und nicht an das zweite Telefon TEL2 geleitet. Das Vorhandensein der Zeichenkette "http://www" kann hier etwas als Entscheidungskriterium herangezogen werden, welche Signale an das zweite Telefon TEL2 und welche an den zweiten Personal Computer PC2 geleitet werden sollen.

Im zweiten Personal Computer PC2 wird in einem ersten Schritt mit Hilfe eines dafür vorgesehen Empfangsprogramms ein Anzeigeprogramm, zum Beispiel ein Internetbrowser, gestartet. In Folge wird die erste Adresse ADDRx vom Empfangsprogramm automatisch als Anzeigeadresse in diesen Internetbrowser eingetragen. Die erste Adresse ADDRx wird daraufhin über das Modem MOD wieder an den zweiten Vermittlungsknoten VK2 zurück übermittelt und von diesem an das Datennetz DNET weitergeleitet.

Sobald die der ersten Adresse ADDRx zugeordnete Information im Datennetz DNET mit Hilfe bekannter Algorithmen aufgefunden wurde, wird diese über den zweiten Vermittlungsknoten VK2 und das Modem MOD an den zweiten Personal Computer PC2 übermittelt und dort angezeigt.

Parallel zu dem angeführten Ablauf wurde, da der erste Teilnehmer T1 den Rufwunsch angenommen habe, in bekannter Weise eine Sprachverbindung zwischen erstem und zweitem Teilnehmer T1 und T2 aufgebaut. Dem zweiten Teilnehmer T2 stehen also der erste Teilnehmer T1 sowie die ihm zugeordnete und auf dem zweiten Personal Computer PC2 angezeigte Information als Auskunftsquelle zur Verfügung.

Als Variante der Erfindung ist aber auch möglich, dass nicht die erste Adresse ADDRx an den zweiten Teilnehmer T2 übertragen wird, sondern direkt die der Adresse zugeordnete Information.

Dazu wird nach der Auswertung der Zuordnungstabelle TABVK1 die erste Adresse ADDRx wie gehabt an den zweiten Vermittlungsknoten VK2 geleitet, jedoch schon dort ausgekoppelt und eine entsprechende Anforderung an das Datennetz DNET gestellt. In Folge wird wieder die der ersten Adresse ADDRx zugeordnete Information über den zweiten Vermittlungsknoten VK2 und das Modem MOD an den zweiten Personal Computer PC2 übermittelt und dort angezeigt.

Zu diesem Zweck wird wieder mit einem geeigneten Empfangsprogramm ein Anzeigprogramm auf dem zweiten Personal Computer PC2 gestartet, anstelle der ersten Adresse ADDRx aber direkt die erhaltene Information an dieses übertragen und dort angezeigt.

## Patentansprüche

1. Verfahren zum Informationsaustausch zwischen einem ersten und einem zweiten Teilnehmer T1 und T2 in einem Telekommunikationsnetz TNET,
**dadurch gekennzeichnet,**
- **dass** dem ersten Teilnehmer T1 zumindest eine Adresse ADDR einer in einem Datennetz DNET gespeicherten Information zugeordnet wird und diese Adresse ADDR im Telekommunikationsendgerät des ersten Teilnehmers T1 oder diese Zuordnung im Telekommunikationsnetz TNET gespeichert wird, insbesondere durch Speicherung der Adresse ADDR in einem dem ersten Teilnehmer T1 zugeordneten Speicherbereich,
- **dass** diese Adresse ADDR bei einem Aufbau einer Gesprächsverbindung zwischen erstem und zweiten Teilnehmer T1 und T2 ausgelesen und zum zweiten Teilnehmer T2 übertragen wird,
- **dass** diese Adresse ADDR von einem Endgerät des zweiten Teilnehmers T2 empfangen wird und in Folge eine Anforderung an das Datennetz DNET gestellt wird, die der übertragenen Adresse ADDR zugeordnete Information zu übermitteln und
- **dass** darauf hin die Information vom Datennetz DNET an das Endgerät übermittelt und dort angezeigt wird.

2. Verfahren zum Informationsaustausch zwischen einem ersten und einem zweiten Teilnehmer T1 und T2 in einem Telekommunikationsnetz TNET,
**dadurch gekennzeichnet,**
- **dass** dem ersten Teilnehmer T1 zumindest eine Adresse ADDR einer in einem Datennetz DNET gespeicherten Information zugeordnet wird und diese Adresse ADDR im Telekommunikationsendgerät des ersten Teilnehmers T1 oder diese Zuordnung im Telekommunikationsnetz TNET gespeichert wird, insbesondere durch Speicherung der Adresse ADDR in einem dem ersten Teilnehmer T1 zugeordneten Speicherbereich,
- **dass** diese Adresse ADDR bei einem Aufbau einer Gesprächsverbindung zwischen erstem und zweiten Teilnehmer T1 und T2 vom Telekommunikationsnetz TNET empfangen oder ausgelesen wird und in Folge vom Telekommunikationsnetz TNET eine Anforderung an das Datennetz DNET gestellt wird, die der übertragenen Adresse ADDR zugeordnete Information zu übermitteln und
- **dass** darauf hin die der Adresse ADDR zugeordnete Information vom Datennetz DNET an das Endgerät des zweiten Teilnehmers T2 übermittelt und dort angezeigt wird.

3. Verfahren zum Informationsaustausch zwischen einem ersten und einem zweiten Teilnehmer T1 und T2 in einem Telekommunikationsnetz TNET,
**dadurch gekennzeichnet,**
- **dass** einer dem ersten Teilnehmer T1 im Telekommunikationsnetz TNET zugeordneten Identifikation zumindest eine Adresse ADDR einer in einem Datennetz DNET gespeicherten Information zugeordnet wird und diese Zuordnung im Telekommunikationsendgerät des zweiten Teilnehmers T2 gespeichert wird,
- **dass** die dem ersten Teilnehmer T1 im Telekommunikationsnetz TNET zugeordnete Identifikation bei einem Aufbau einer Gesprächsverbindung zwischen erstem und zweiten Teilnehmer T1 und T2 zum zweiten Teilnehmer T2 übertragen wird,
- **dass** dort mit Hilfe der empfangenen Identifikation und der gespeicherten Zuordnung die Adresse ADDR der in dem Datennetz DNET gespeicherten Information ausgelesen wird und in Folge eine Anforderung an das Datennetz DNET gestellt wird, die der übertragenen Adresse ADDR zugeordnete Information zu übermitteln und
- **dass** darauf hin die Information vom Datennetz DNET an das Endgerät übermittelt und dort angezeigt wird.

4. Verfahren nach einem der Ansprüche 1 bis 3, **dadurch gekennzeichnet, dass** die Adresse ADDR mit Hilfe des Dienstes Calling Name Identification Presentation und/oder Connected Name Identification Presentation übertragen wird.

5. Verfahren nach einem der Ansprüche 1 bis 4, **dadurch gekennzeichnet, dass** nur ein Teil der Adresse ADDR an das Endgerät des zweiten Teilnehmers T2 übermittelt wird und dort ergänzt wird, insbesondere weil nur ein Teil der Adresse ADDR im Telekommunikationsendgerät oder Telekommunikationsnetz TNET gespeichert wurde.

6. Verfahren nach einem der Ansprüche 1 bis 5, **dadurch gekennzeichnet, dass** vor dem Übertragen der Adresse ADDR der Information oder der Information selbst geprüft wird, ob der zweite Teilnehmer T2 über ein zur Anzeige dieser Information geeignetes und/oder betriebsbereites Endgerät verfügt.

7. Verfahren nach einem der Ansprüche 1 bis 6, **dadurch gekennzeichnet, dass** bei Vorhandensein von mehreren zugeordneten Adressen ADDR eine davon ausgewählt und nur diese an den zweiten Teilnehmer T2 übermittelt wird, insbesondere in Abhängigkeit von einer Uhrzeit und/oder einem Zustand und/oder dem Auftreten eines Ereignisses und/oder der Adresse des zweiten Teilnehmers T2 im Telekommunikationsnetz TNET und/oder einer dem zweiten Teilnehmer T2 zugeordneten Eigenschaft.

8. Telekommunikationsnetz TNET,
**dadurch gekennzeichnet,**
- **dass** darin Mittel zum Speichern und zum Auslesen einer einem ersten Teilnehmer T1 zugeordneten Adresse ADDR, welche auf eine Information in einem Datennetz DNET verweist, vorgesehen sind,
- **dass** dieses Mittel zur Übertragung dieser Adresse ADDR an einen zweiten Teilnehmer T2 dieses Telekommunikationsnetzes TNET in Folge eines Verbindungswunsches zwischen dem ersten und dem zweiten Teilnehmer T1 und T2 umfasst.

9. Telekommunikationsnetz TNET,
**dadurch gekennzeichnet,**
- **dass** darin Mittel zum Speichern und zum Auslesen einer einem ersten Teilnehmer T1 zugeordneten Adresse ADDR, welche auf eine Information in einem Datennetz DNET verweist, vorgesehen sind,
- **dass** dieses Mittel zum Stellen einer Anforderung an dieses Datennetz DNET beinhaltet, die dieser Adresse ADDR zugeordnete Information in Folge eines Verbindungswunsches zwischen dem ersten und dem zweiten Teilnehmer T1 und T2 zu übermitteln und
- **dass** dieses Mittel zur Übertragung dieser Information an einen zweiten Teilnehmer T2 dieses Telekommunikationsnetzes TNET umfasst.

10. Teilnehmerendgerät,
**dadurch gekennzeichnet,**
- **dass** dieses Mittel zum Speichern einer Adresse ADDR, welche auf eine Information in einem Datennetz DNET verweist, umfasst und
- **dass** dieses Mittel zum Senden dieser Adresse ADDR beim Aufbau einer Gesprächsverbindung umfasst.

11. Teilnehmerendgerät,
**dadurch gekennzeichnet,**
- **dass** dieses Mittel zum Empfang einer Adresse ADDR, welche auf eine Information in einem Datennetz DNET verweist, beim Aufbau einer Gesprächsverbindung umfasst,
- **dass** dieses Mittel zum Stellen einer Anforderung an dieses Datennetz DNET beinhaltet, die dieser Adresse ADDR zugeordnete Information zu übermitteln und
- **dass** dieses Mittel zur Darstellung dieser Information umfasst.

12. Datenträger, dessen Inhalt, wenn er auf ein Teilnehmerendgerät transferiert und dort in Form eines Programms gestartet wird, alle die vom Teilnehmerendgerät durchzuführenden Schritte eines Verfahrens nach einem der Ansprüche 1 bis 7 ausführt.
